# EUROPEAN PATENT APPLICATION

(11) **EP 1 170 354 A1**
(43) Date of publication of application: **09.01.2002**
(21) Application number: 01900764.0
(22) Date of filing: 15.01.2001
(51) Int. Cl.: C10B 53/00

(54) **DRY-DISTILLING/VOLUME REDUCING DEVICE FOR WASTES**

(30) Priority: 14.01.2000 JP 2000010193
(71) Applicant: Okamoto, Ryoichi, Fukuyama-shi, Hiroshima 720-0805 (JP); Shishido, Hiromu, Hiroshima-shi, Hiroshima 732-0048 (JP); Omoda, Norio, Kure-shi, Hiroshima 737-0874 (JP)
(72) Inventor: Okamoto, Ryoichi, Fukuyama-shi, Hiroshima 720-0805 (JP); Shishido, Hiromu, Hiroshima-shi, Hiroshima 732-0048 (JP); Omoda, Norio, Kure-shi, Hiroshima 737-0874 (JP)
(74) Representative: Müller-Boré & Partner Patentanwälte
(86) International application number: JP0100198
(87) International publication number: WO0151587

(57) **Abstract**

A dry distillation and volume reduction apparatus for waste comprising a superheated steam generator 1 for generating a superheated steam, a dry distillation and volume reduction vessel 2 for heating waste 5 and subjecting the same to dry distillation and volume reduction with the superheated steam supplied from the superheated steam generator 1, and heating gas supplier 4 for supplying exhaust gas of an engine 3 as a heat source for heating the superheated steam generator 1. Furthermore, the superheated steam can also be generated by producing a combustible gas by incomplete combustion of carbides 52 produced by heating of organic waste 52 in the dry distillation and volume reduction vessel 2 using heating gas supplier 4.

## Description

### Technical Field of the Invention

The present invention relates to a dry distillation and volume reduction apparatus for waste, in which waste of a variety of types, in particular, organic waste such as unneeded food or biological waste of crops, excrements, for example, of domestic animals, wood, paper, or fiber chips, or waste tires is subjected to dry distillation and volume reduction by heat treatment.

### Background Art

In a conventional method for operating a heat treatment equipment for waste comprising a pyrolysis furnace which is provided with a first heating apparatus for indirectly heating the waste inside the pyrolysis furnace and a second heating apparatus for directly heating the waste inside the pyrolysis furnace by supplying the air and which converts the waste into a low-temperature dry distilled gas and a solid pyrolysis residue and a high-temperature furnace for burning the low-temperature dry distilled gas and solid pyrolysis residue, for example, as described in Japanese Patent Application Laid-open No. H11-294736, basic heating of waste is conducted with the first heating apparatus and auxiliary heating is conducted, if necessary, so as to convert efficiently the waste into the low-temperature dry distilled gas and solid pyrolysis residue by introducing air into the inner chamber of the pyrolysis furnace via the second heating apparatus.

When waste is converted into the low-temperature dry distilled gas and solid pyrolysis residue by such indirect and direct heating, fuel composed of petroleum or natural gas and the like is required for heating, which results in a high running cost. Furthermore, when a structure is used in which the low-temperature dry distilled gas and solid pyrolysis residue obtained by heat treatment of the waste are burned and the combustion heat is used to heat the waste with the object of reducing the fuel cost, atmospheric pollutants are produced during combustion of the low-temperature dry distilled gas and solid pyrolysis residue and special equipment is required for treatment thereof.

In view of the above, it is an object of the present invention to provide a dry distillation and volume reduction apparatus for waste which has a simple structure and in which waste of different types can be subjected to effective dry distillation and volume reduction.

### Disclosure of the Invention

The present invention is directed to a dry distillation and volume reduction apparatus for waste, comprising a superheated steam generator for generating a superheated steam, a dry distillation and volume reduction vessel for heating the waste and subjecting it to dry distillation and volume reduction with the superheated steam supplied from the superheated steam generator, and heating gas supplier for supplying exhaust gas of an engine as a heat source for heating the superheated steam generator. With such structure, the superheated steam generated by heating water with the exhaust gas discharged from an engine is supplied to the dry distillation and volume reduction vessel where the waste is heated and subjected to dry distillation and volume reduction by the superheated steam.

Also, the present invention is directed to a dry distillation and volume reduction apparatus for waste, comprising a superheated steam generator for generating a superheated steam, a dry distillation and volume reduction vessel for heating and subjecting the organic waste to dry distillation and volume reduction with the superheated steam supplied from the superheated steam generator, and heating gas supplier for supplying combustible gas generated by incomplete combustion of carbides produced in the dry distillation and volume reduction vessel as a heat source for heating the superheated steam generator. With such structure, the superheated steam can be generated with good efficiency by producing carbides by dry distillation and volume reduction of organic wastes and using the combustible gas generated by incomplete combustion of the carbides.

### Brief Description of the Drawings

FIG. 1 illustrates a first embodiment of a dry distillation and volume reduction apparatus for waste in accordance with the present invention;
FIG. 2 illustrates a specific structure of a cyclone-type composite flow drier;
FIG. 3 illustrates a specific structure of a rotary drier;
FIG. 4 illustrates a second embodiment of a dry distillation and volume reduction apparatus for waste in accordance with the. present invention; and
FIG. 5 illustrates a third embodiment of a dry distillation and volume reduction apparatus for waste in accordance with the present invention.

### Best Mode for Carrying out the Invention

The present invention will be described below in greater detail with reference to the drawings attached.

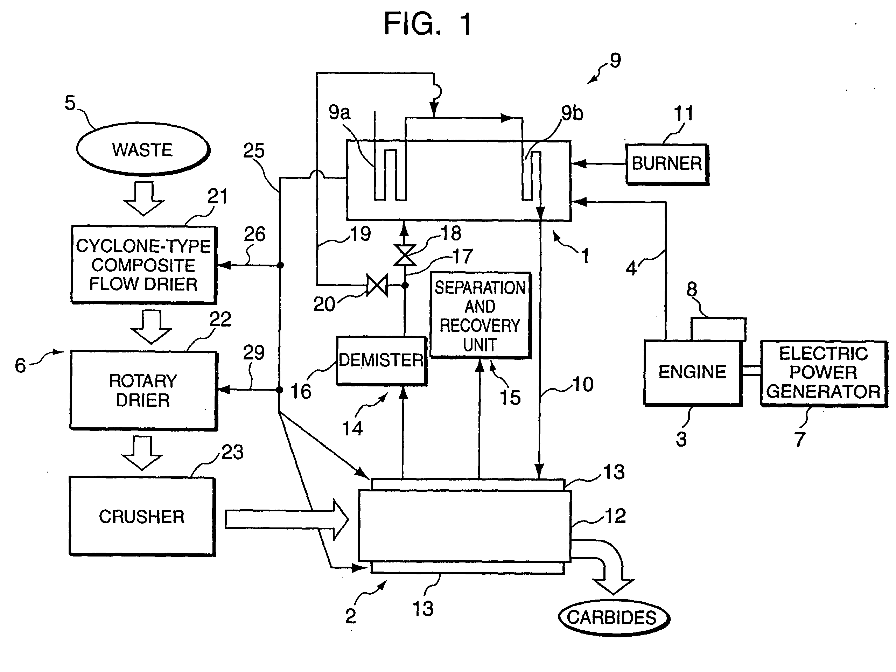

FIG. 1 illustrates a first embodiment of a dry distillation and volume reduction apparatus for waste in accordance with the present invention. This dry distillation and volume reduction apparatus for waste comprises a superheated steam generator 1 for generating a superheated steam, a dry distillation and volume reduction vessel 2 for heating the waste 5 and subjecting it to dry distillation and volume reduction with the superheated steam supplied from the superheated steam generator 1, heating gas supplier 4 comprising an exhaust channel for supplying high-temperature exhaust gas led out from an engine 3 as a heat source for heating the superheated steam generator 1, and the waste supplier 6 for supplying waste 5 to the dry distillation and volume reduction vessel 2.

The superheated steam generator 1 comprises a feeding pipe 9 for feeding warm water led out from a radiator 8 provided in a cooling water system of engine 3 serving as a drive source of a power generator 7, a superheated steam supply pipe 10 for supplying the superheated steam lead out from the feed pipe 9 to the dry distillation and volume reduction vessel 2, and a burner 11 for burning a fuel such as petroleum or natural gas. In such structure, superheated steam is generated by heating the warm water passing through the feed pipe 9 with exhaust gas of engine 3 supplied from the heating gas supplier 4 and by the combustion gas of burner 11.

The warm water feed pipe 9 comprises a first heating portion 9a disposed at the rear end (boiler) side of superheated steam generator 1 and a second heating portion 9b disposed at the front end (superheater) side of superheated steam generator 1. Heating of the warm water when it passes through the first heating portion 9a generates saturated steam with a temperature of 100°C under normal pressure, which satisfies the equation of state of gas, and heating of the saturated steam when it passes through the second heating portion 9b generates superheated steam superheated to a temperature of 250~500°C under normal pressure.

The dry distillation and volume reduction vessel 2 comprises a body 12 of the dry distillation and volume reduction vessel into which the waste 5 supplied from the waste supplier 6 is transported, a jacket 13 for heating the dry distillation and volume reduction vessel body 12 with high-temperature exhaust gas led out from the superheated steam generator 1 via an exhaust pipe 25, a reflux unit 14 for refluxing a portion of the high-temperature gas led out from the dry distillation and volume reduction vessel body 12 and jacket 13 to the superheated steam generator 1, and a separation and recovery unit 15 for separating and recovering useful components present in the high-temperature gas.

The dry distillation and volume reduction vessel body 12 pyrolyzes the waste 5 in a non-oxidizing/reducing manner in an oxygen-free or low-oxygen atmosphere with superheated steam supplied from the superheated steam generator 1 via the superheated steam supply pipe 10, that is, the low-pressure superheated steam under a pressure of no less than the normal pressure which has been superheated under the normal pressure to a temperature, for example, of 250~500°C. If necessary, the dry distillation and volume reduction vessel body 12 also conducts drying. The low-pressure superheated steam under a pressure of no less than the normal pressure is a superheated steam whose supply pressure is set to a normal pressure (atmospheric pressure) or to a low-pressure region from above 1 atm to about 2 atm.

When the supply pressure of superheated steam is set, as described above, to a normal pressure or a value exceeding 1 atm (higher than a normal pressure), waste 5 is heated only by the superheated steam containing no oxygen, without penetration of air into the dry distillation and volume reduction vessel body 12. Therefore, drying or pyrolysis is conducted under non-oxidizing/reducing conditions. Here, the term oxidizing/reducing conditions means that mainly reducing pyrolysis is conducted under a superheated steam atmosphere. Furthermore, when waste 5 is introduced, apparently a certain amount of air is admixed to the raw materials. In accordance with the present invention, such low-oxygen atmosphere is not excluded. On the other hand, setting the supply pressure of the superheated steam to a low pressure of less than about 2 atm makes it possible to prevent leakage of superheated steam to the outside of the dry distillation and volume reduction vessel body 12 and to charge the waste 5 continuously.

Furthermore, the temperature of superheated steam can be set to an appropriate value according to the type or state of waste 5 within a range of higher than 100°C to about 1200°C under normal pressure. If the temperature is too low, the time required to pyrolyze the waste 5 becomes long, and if the temperature is high, the apparatus can be easily damaged. Therefore, it is preferred that the temperature be set within a range of 250~500°C under normal pressure. Moreover, at a stage at which organic waste is added to perfect carbides, the pyrolysis thereof may be terminated.

Waste 5 transported from the waste supplier 6 to the dry distillation and volume reduction vessel body 12 is heated with the superheated steam supplied from the superheated steam supply pipe 10. As a result, the waste is subjected to dry distillation and volume reduction producing carbides and dry distilled gas. At the same time, the high-temperature gas in which the dry distilled gas produced during dry distillation and volume reduction of waste 5, the superheated steam supplied into the dry distillation and volume reduction vessel body 12, and the exhaust gas supplied into the jacket 13 are combined together is led out to the reflux unit 14 and the separation and recovery unit 15.

The reflux unit 14 comprises a demister 16 for collecting and removing drops of liquid present in the high-temperature gas lead out from the dry distillation and volume reduction vessel 2, a reflux pipe 17 for refluxing the high-temperature gas lead out from the demister 16 into the superheated steam generator 1, a first switch valve 18 installed in the reflux pipe 17, a supply pipe 19 for supplying the high-temperature gas led out from the demister 16 into the feed pipe 9, and a second switch valve 20 installed in the supply pipe 19.

In a cold state immediately after the start of operation of the dry distillation and volume reduction apparatus, the pyrolysis of waste 5 does not proceed in the dry distillation and volume reduction vessel 2. Therefore, the high-temperature gas lead out from the demister 16 is supplied to the feed pipe 9 by closing the first switch valve 18 of reflux pipe 17 and opening the second switch valve 20 of supply pipe 19. As a result, warm water present in the feed pipe 9 is directly heated and superheated steam is rapidly generated.

On the other hand, in a warm state after a certain time has elapsed since the operation of the dry distillation and volume reduction apparatus was started, heating of waste proceeds inside the dry distillation and volume reduction vessel 2 and the dry. distilled gas is generated. Therefore, the high-temperature gas lead out from the demister 16 is refluxed into the casing of superheated steam generator 1 by opening the first switch valve 18 of reflux pipe 17 and opening the second switch valve 20 of supply pipe 19. As a result, the superheated steam generator 1 is effectively heated, while the admixture of the impurities present in the dry distilled gas to the warm water present in the feed pipe 9 is prevented.

Further, since the high-temperature gas lead out from the dry distillation and volume reduction vessel 2 comprises the dry distilled gas containing useful components such as water or methanol, acetic acid, and oils produced by pyrolysis of waste 5, the useful components are separated and recovered from the dry distilled gas by distillation of high-temperature gas in separation and recovery unit 15, and gas components from which the useful components have been separated are released into the atmosphere. A configuration may also be used in which the superheated steam generator 1 is heated by refluxing the gas components from which the useful components have been separated to the superheated steam generator 1.

The waste supplier 6 comprises first and second driers 21, 22 for hot flow preheating and drying various types of waste 5 before it is supplied to the dry distillation and volume reduction vessel 2, a crusher 23 for crushing and comminuting waste 5 in advance in the dry distillation and volume reduction vessel 2, and a transportation mechanism (not shown) such as a screw conveyor or the like for transporting the crushed waste 5 into the dry distillation and volume reduction vessel 2.

Typical examples of waste 5 include unneeded food (biological waste), soy sauce waste, sake lees, tofu refuse and the like, waste of crops, animals, plants, wood (wood chips), fish, paper, fibers and the like, sludge produced in wastewater treatment, excreta discarded in livestock industries, and organic waste discarded in plants and the like, such as organic plastics, waste tires, foamed styrene, food trays and the like, but waste 5 is not limited thereto and includes industrial waste of a variety of types.

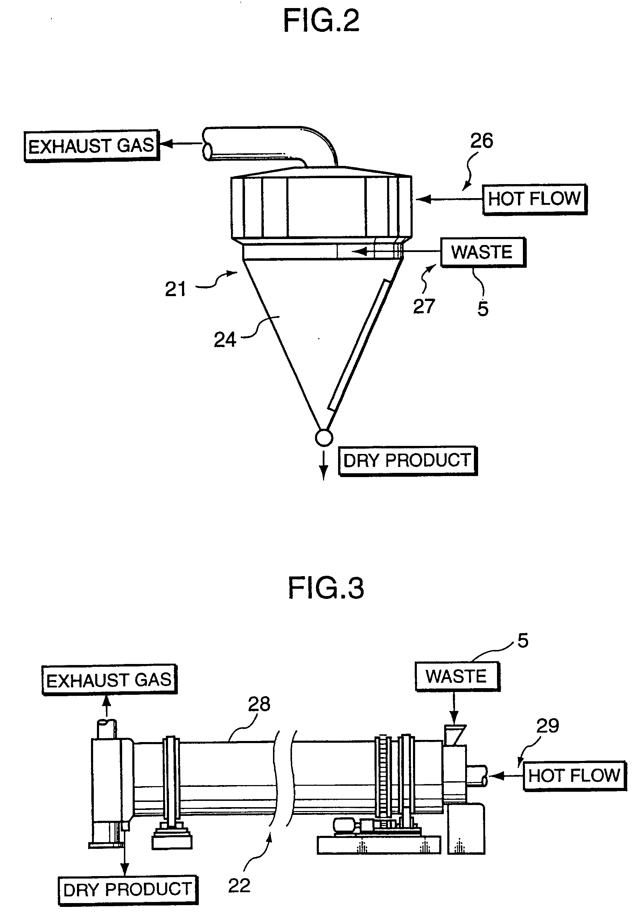

The first drier 21, as shown in FIG. 2, is composed of a cyclone-type composite flow drier comprising a conical container 24 which narrows downward, hot flow supplier 26 for supplying hot flow consisting of exhaust gas led out from the superheated steam generator 1 via the exhaust pipe 25 along the inner peripheral surface of the conical container 24, and waste transporter 27 for transporting waste 5 along the inner peripheral surface of the conical container 24.

Further, the second drier 22, as shown in FIG. 3, is composed of a rotary drier comprising an inclined rotary cylinder 28 provided with a sweeping blade (not shown) for sweeping the waste upward and hot flow supplier 29 for supplying hot flow consisting of exhaust gas led out from the superheated steam generator 1 into the inclined rotary cylinder 29.

When dry distillation and volume reduction treatment of waste 5 is conducted by using the dry distillation and volume reduction apparatus of the above-described configuration, waste 5 is dried in advance by the first and second driers 21, 22, the dried waste 5 is crushed in advance with the crusher 23, and then the crushed waste 5 is transported by the transportation mechanism into the dry distillation and volume reduction vessel 2. Furthermore, warm water led out from the radiator 8 of engine 3 is led out into the fed pipe 9 and supplied into the superheated steam generator 1. The high-temperature exhaust gas led out from the engine 3 is supplied into the superheated steam generator 1 by the heating gas supplier 4 and, if necessary, the burner 11 is ignited and the combustion gas is supplied into the superheated steam generator 1, thereby heating the warm water in the feed pipe 9 and generating superheated steam superheated to a temperature of, for example, 250-500°C under normal pressure.

Then, the superheated steam generated inside the superheated steam generator 1 is supplied from the superheated steam supply tube 10 under a low pressure not less than the normal pressure into the dry distillation and volume reduction vessel 2. Inside the dry distillation and volume reduction vessel 2, the waste 5 is heated by the superheated steam blown thereon. As a result, waste 5 is subjected to dry distillation and pyrolyzed into a dry distillate such as carbides and a dry distillated gas. The dry distillate such as carbides is recovered in a state in which the volume thereof has been substantially reduced. Furthermore, a part of the dry distilled gas is reused as a high-temperature gas by refluxing into the superheated steam generator 1 by the reflux unit 14 and the remaining portion of the dry distilled gas is led out into the separation and recovery unit 15, and useful components present in the dry distilled gas are separated and recovered by the separation and recovery unit 15.

The above-described structure comprises the superheated steam generator 1 for generating a superheated steam by heating water composed of warm water led out from the radiator 8, dry distillation and volume reduction vessel 2 for heating waste 5 with superheated steam supplied from the superheated steam generator 1 for dry distillation and volume reduction, and heating gas supplier 4 for supplying exhaust gas of engine 3 as a heat source for heating superheated steam generator 1, wherein the superheated steam is generated by heating the water with the exhaust gas supplied into the superheated steam generator 1 from the heating gas supplier 4 and then the superheated steam is supplied into the heating gas supplier 4, waste 5 is supplied into the heating gas supplier 4, and waste 5 is heated with the superheated steam and subjected to dry distillation and volume reduction. Therefore, waste of various types can be subjected to effective dry distillation and volume reduction with a simple structure.

Thus, superheated steam is generated by heating water with exhaust gas of engine 3 that has been conventionally released into the atmosphere. Therefore, the superheated steam can be generated by effectively using thermal energy of engine 3. Since waste 5 is heated by supplying superheated steam into the dry distillation and volume reduction vessel 2, waste 5 can be rapidly and effectively pyrolyzed by the condensation heat transfer effect of steam and a dry distillate such as carbides and dry distilled gas can be produced. At the same time, the dry distillate can be dried and its volume can be effectively reduced.

Therefore, the distillate such as carbides generated by dry distillation of waste 5 can be effectively used as a fertilizer, construction material, or active carbon. Furthermore, since the dry distillate composed of carbides and the like has been subjected to substantial volume reduction, the efficiency of operations conducted, for example, when the distillate is discharged as waste can be improved. One more advantage is that malodorous components such as ammonia, mercaptans, hydrogen sulfide, methyl disulfide, trimethylamine, acetaldehyde, or styrene and the like that are produced when the waste 5 is subjected to dry distillation and volume reduction inside the dry distillation and volume reduction vessel 2 can be effectively deodorized by pyrolysis.

When grass and the like is subjected to dry distillation and volume reduction with the above-described dry distillation and volume reduction apparatus, dry feed can be produced by terminating superheating of grass before it is carbonized. Furthermore, ingot-like dry distillation and volume reduction product can be produced by subjecting waste such as foamed styrene and the like to dry distillation and volume reduction in the dry distillation and volume reduction apparatus. Moreover, it is also possible to produce a dry distillation and volume reduction product composed of carbides and glass fibers and the like by subjecting waste composed, for example, of FRP waste to dry distillation and volume reduction in the dry distillation and volume reduction apparatus.

In the above-described embodiment, a structure is used in which waste 5 supplied to the dry distillation and volume reduction vessel 2 is dried in advance by the first and second driers 21, 22. As a result, the processing efficiency of waste 5 can be effectively increased by comparison with dry distillation and volume reduction in which water-containing waste is directly heated in the dry distillation and volume reduction vessel 2.

In particular, as shown in the above-described embodiment, when the first drier 21 is provided which is composed of a cyclone-type composite flow drier comprising a conical container 24 which narrows downward, hot flow supplier 26 for supplying hot flow along the inner peripheral surface of conical container 24, and waste transporter 27 for transporting waste along the inner peripheral surface of conical container 24, the waste 5 transported into the conical container 24 with the waste transporter 27 rotates along the inner surface of conical container 24 together with the hot flow supplied from the hot flow supplier 26. Therefore, the hot flow can be efficiently brought in contact with waste 5 and the waste can be dried effectively.

Further, when the second drier 22 is provided which is composed of a rotary drier comprising an inclined rotary cylinder 28 provided with a sweeping blade for sweeping the waste upward and hot flow supplier 29 for supplying hot flow into the incline rotary cylinder 28, the waste 5 transported into the inclined rotary cylinder 28 can be heated with good efficiency with the hot flow supplied from the hot flow supplier 29 as the waste is swept upward by the sweeping blade according to rotation of the inclined rotary cylinder 28. Therefore, such structure is suitable for continuous drying of a large amount of particulate material with a comparatively small content of water.

In particular, in a configuration using the high-temperature exhaust gas led out from the superheated steam generator 1 via the exhaust pipe 25 as a heat source for heating hot flow supplier 26, 29 provided in the first and second driers 21, 22, as in the above-described embodiment, the waste 5 transported into the driers 21, 22 can be dried by effectively using thermal energy of the exhaust gas.

In another possible configuration, the high-temperature gas led out from the dry distillation and volume reduction vessel 2 is used as a heat source for heating hot flow supplier 26, 29 provided in the first and second driers 21, 22. In this case, too, waste 5 transported into driers 21, 22 can be dried efficiently by effectively using thermal energy of the high-temperature gas led out from the dry distillation and volume reduction vessel 2.

Another advantage of the above-described embodiment, is that a crusher 23 is provided for crushing in advance the waste 5 supplied into the dry distillation and volume reduction vessel 2, which makes it possible to subject the waste that was crushed in advance with the crusher 23 to dry distillation and volume reduction by efficiently heating the waste inside the dry distillation and volume reduction vessel 2. The arrangement order and scale of the first and second driers 21, 22 and crusher 23 are not limited to the above-described embodiment and can be changed in a variety of ways. A structure may also be used in which some or all of the first and second driers 21, 22 and crusher 23 are omitted.

Furthermore, the superheated steam may also be generated by supplying and heating tap water in the superheated steam generator 1 instead of employing the structure of the above-described embodiment in which the feed pipe 9 is provided for feeding the warm water led out, for example, from the radiator 8 installed in a cooling water system of engine 3 to the superheated steam generator 1 and generating the superheated steam inside the superheated steam generator 1 by heating the warm water therein. However, with the configuration in which, as described above, the superheated steam for dry distillation and volume reduction of waste is generated by heating the warm water led out from the cooling water system of engine 3 with exhaust gas of engine 3, the required thermal energy can be saved by comparison with the case when the superheated steam is generated by heating cold water such as tap water or the like.

In the above-described embodiment, the superheated steam generator 1 is provided with the burner 11 serving as heater for superheated steam generation. Therefore, the warm water fed through the feed pipe 9 is heated by both the exhaust gas released from the engine 3 and the combustion gas of burner 11. As a result, the superheated steam for dry distillation and volume reduction of waste 5 can be effectively produced in the superheated steam generator 1.

Further, as shown in the above-described embodiment, when the reflux unit 14 is provided for reusing the high-temperature gas led out from the dry distillation and volume reduction vessel 2 as a heat source for heating in the superheated steam generation by refluxing the high-temperature gas to the superheated steam generator 1, after the waste 5 has been subjected to dry distillation and volume reduction in the dry distillation and volume reduction vessel 2, the high-temperature gas led out from the dry distillation and volume reduction vessel 2 can be reused as a heat source for heating in the superheated steam generation by refluxing the high-temperature gas to the superheated steam generator 1. Therefore, thermal energy of the high-temperature gas can be used effectively. Moreover, because malodorous components contained in the high-temperature gas can be effectively deodorized by heating and pyrolysis with superheated steam inside the superheated steam generator 1, the occurrence of events when an operator or other people will feel uncomfortable because of the odor can be prevented.

Moreover, since in the above-described embodiment, separation and recovery unit 15 is provided for separating and recovering the useful components from the dry distilled gas produced during dry distillation and volume reduction of waste 5 by the dry distillation and volume reduction vessel 2, the useful components, for example, methanol, acetic acid, oils and water present in the dry distilled gas can be separated and recovered from the dry distilled gas by the separation and recovery unit 15 during dry distillation and volume reduction of waste 5 by the dry distillation and volume reduction vessel 2 and those recovered components can be used effectively.

For example, with the configuration in which combustible components composed of methanol and oils that are recovered by the separation and recovery unit 15 are used as a fuel for burner 11, those combustible components can be used effectively, the fuel cost of burner 11 can be reduced, and superheated steam can be efficiently generated by effectively heating water in the superheated steam generator 1 with both the combustion gas of burner 11 and the exhaust gas released from the engine 3.

In particular, when a configuration is employed in which, as shown in the above-described embodiment, a low-pressure superheated steam under a pressure of no less than the normal pressure that has been superheated to a temperature of 250-500°C under normal pressure is supplied from the superheated steam generator 1 to the dry distillation and volume reduction vessel 2 and waste 5 is pyrolyzed in an oxygen-free or low-oxygen atmosphere, the waste 5 can be subjected to efficient dry distillation and volume reduction with a simple apparatus, without problems associated with the utilization of high-pressure superheated steam which led to leakage of the steam and made it difficult to charge the raw materials continuously.

Moreover, waste 5 can be subjected to effective dry distillation and volume reduction without problems associated with incineration of wastes in the presence of oxygen, those problems including the generation or harmful substances such as dioxins or malodorous components and carbon dioxide causing environmental pollution. For example, when a test was conducted in which waste consisting of eaves trough made of hard vinyl chloride was subjected to dry distillation and volume reduction with the dry distillation and volume reduction apparatus and the concentration of dioxins present in the dry distillation and volume reduction product was measured, the concentration of dioxins in the dry distillation and volume reduction product of 0.17 ng/g-dry was 0.0014 ng-TEQ/g-dry. This value is extremely small by comparison with a standard value of 3 ng-TEQ/g-dry indicated in the Standards for Soot Processing Relating to Waste Incinerators developed by the Ministry of Health and Welfare of Japan. Thus, it was confirmed that practically no dioxins are contained in the dry distillation and volume reduction product.

The feed sampling method and analysis method used in the test corresponded to the Methods for Calculating the Concentration of Dioxins described in Publication No. 234 of the Ministry of Health and Welfare as of December 1, 1997, and Manual for Standard Measurement and Analysis of Dioxins in Waste Processing (Ministry of Health and Welfare, Environmental Health Bureau, Waterworks Environment Department, Environmental Control Group, February, 1997), Issue 38 as of February 26, 1997. Furthermore, the analysis of dioxins was conducted with respect to dioxins chlorine-substituted in 2, 3, 7, and 8 positions, 17 furan isomers, 4-7 chlorinated dioxins, and furan homologues.

Carbides produced in the dry distillation and volume reduction vessel 2 may be supplied to the superheated steam generator 1 and burned with the burner 11. With this configuration, too, the superheated steam can be efficiently generated by effectively heating water in the superheated steam generator 1 with both the combustion gas of the burner 11 and the exhaust gas released from the engine 3, while saving the fuel cost of burner 11.

In place of the configuration of the above-described embodiment in which the exhaust gas of engine 3 serving as a drive source of electric power generator 7 is used as a heat source for heating the superheated steam generator 1, a configuration may be used in which the exhaust gas of an engine serving as a drive source of a pump, blower, or compressor is supplied as a heat source for heating the superheated steam generator 1. However, the advantage of the configuration described in the embodiment above is that when the exhaust gas of engine 3 serving as a drive source of electric power generator 7 is used as a heat source for heating the superheated steam generator 1, the electric power of electric power generator 7 can be supplied to a motor unit of the dry distillation and volume reduction apparatus in accordance with the present invention, for example, to the waste supplier 6. Therefore, the waste supplier 6 can be driven without using the external electric power.

A part of the superheated steam generated by the superheated steam generator 1 may be supplied to a turbine power generator and this turbine power generator may be driven by the superheated steam. The advantage of such configuration is in that the turbine power generator can be driven by effectively using the superheated steam, and the motor unit of the dry distillation and volume reduction apparatus can be driven by the electric power of the turbine power generator.

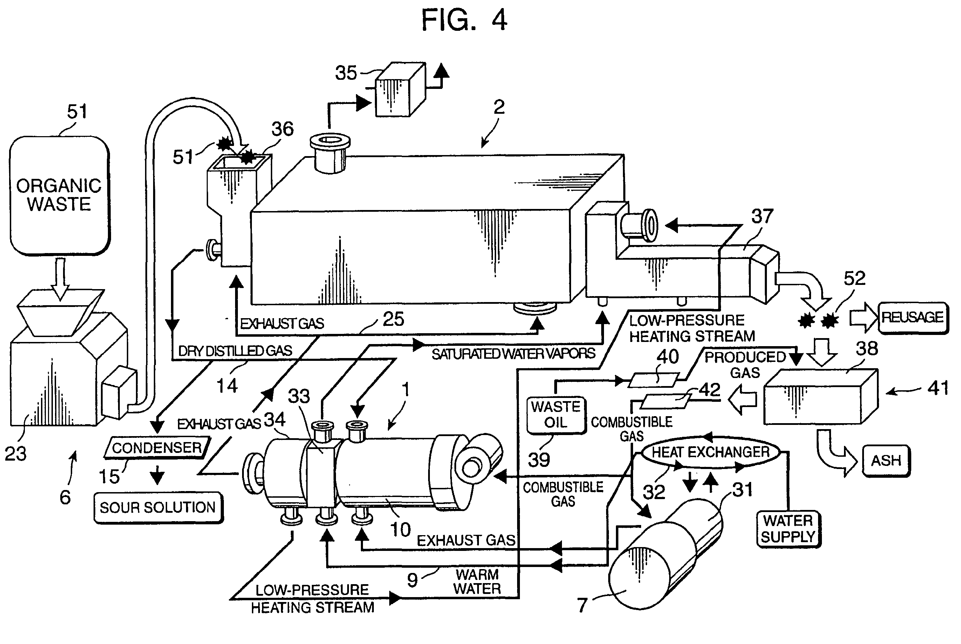

FIG. 4 illustrates a second embodiment of a dry distillation and volume reduction apparatus for waste in accordance with the present invention. This dry distillation and volume reduction apparatus for waste comprises a superheated steam generator 1 for generating a superheated steam, a dry distillation and volume reduction vessel 2 for heating organic waste 51 and subjecting it to dry distillation and volume reduction with the superheated steam supplied from the superheated steam generator 1, heating gas supplier 41 for supplying combustible gas generated by incomplete combustion of carbides 52 produced in the dry distillation and volume reduction vessel 2 as a heat source for heating the superheated steam generator 1, and a waste supplier 6 for supplying organic waste 51 to the dry distillation and volume reduction vessel 2.

The superheated steam generator 1 comprises the feed pipe 9 for feeding the warm water supplied via a heat exchanger 32 of a rotary engine 31 driving the electric power generator 7, a superheated steam supply pipe 10 for supplying the generated superheated steam to the dry distillation and volume reduction vessel 2, a burner 11 for burning the combustible gas supplied from the heating gas supplier 41, a boiler 31 for producing saturated steam at a temperature of 100°C under normal pressure by heating the warm water supplied from the feed pipe 9 with the exhaust gas of rotary engine 31 and the combustion gas of burner 11, and a superheater 34 for producing a steam superheated under normal pressure to a temperature of, for example, 250-500°C by heating the saturated steam produced in boiler 33.

The dry distillation and volume reduction vessel 2 has almost the same structure as that of the first embodiment. Thus, a dry distillation and volume reduction vessel 22 comprises a dry distillation and volume reduction vessel body (not shown) into which the organic waste 51 supplied from the waste supplier 6 is transported, a jacket (not shown) for heating the dry distillation and volume reduction vessel body with high-temperature exhaust gas led out from the superheated steam generator 1 via the exhaust pipe 25, a reflux unit 14 for refluxing a portion of the dry distilled gas led out from the dry distillation and volume reduction vessel body to the burner 10 of superheated steam generator 1, the separation and recovery unit 15 comprising a condenser for separating and recovering the useful components present in the dry distilled gas, and a scrubber 35 for removing harmful components present in the exhaust gas led out from the dry distillation and volume reduction vessel body.

The dry distillation and volume reduction vessel 2 pyrolyzes organic waste 51 in a non-oxidizing/reducing manner in an oxygen-free or low-oxygen atmosphere with superheated steam supplied from the superheated steam generator 1 via the superheated steam supply pipe 10, that is, with low-pressure superheated steam under a pressure of no less than the normal pressure which has been superheated under the normal pressure to a temperature, for example, of 250-500°C, and produces carbides 52 and dry distilled gas. The carbides 52 produced in the dry distillation and volume reduction vessel 22 are cooled with a cooler 52 and then at least a portion thereof is supplied to the heating gas generator 41.

The waste supplier 6 comprises a crusher 23 for crushing and comminuting organic waste 51 in advance before it is supplied to the dry distillation and volume reduction vessel 2 and a drying apparatus 36 for heating and drying the crushed organic waste 51 and then transporting it into the dry distillation and volume reduction vessel 2. Drying of organic waste 51 is preferably conducted with superheated steam under a normal pressure and a temperature of 150~500°C. In case of organic waste with an ordinary water content ratio, the water content becomes almost 0 wt.% within a heating time of about 3-40 min. By contrast, organic waste with a particularly high content of water consumes a large amount of heat for drying and the time required for drying extends greatly; at a temperature of about 350°C, about 140 min can be required to decrease the water content to almost 0 wt.%. Therefore, it is desired that the drying time be shortened by using high-temperature superheated steam.

Either a method in which the drying process is conducted with superheated steam and then pyrolysis is separately conducted with superheated steam or a method in which the drying and pyrolysis are continuously conducted with superheated steam in the same apparatus may be employed. Organic waste with a low water content may be dried at normal temperature or with hot flow. When the drying process and pyrolysis process are conducted in separate apparatus, the organic waste may be transferred to the dry distillation and volume reduction apparatus once the water content in the organic waste has become less than about 20%. The drying time can be appropriately set based on the water content and amount of raw materials transported by an apparatus operating in a batch mode or a transfer apparatus.

Heating gas supplier 41 comprises a gasification furnace 38 for incompletely combusting and gasifying the charged carbides 52 and waste oil addition unit 40 for adding waste oil to carbides 52 by supplying the waste oil supplied from a waste oil tank 39 to the gasification furnace 38. After the combustible gas generated by incomplete combustion of carbides 52 having the waste oil added thereto has been purified with a purification apparatus 42, a portion thereof is supplied as a fuel of the rotary engine and the remaining portion is supplied to the gas burner 10 of superheated steam generator 1.

In the dry distillation and volume reduction apparatus shown in FIG. 4, various samples having a raw material shape shown in the table below were charged into the dry distillation and volume reduction vessel 1, drying with superheated steam under normal pressure that has been superheated to a temperature of 350°C and pyrolysis-carbonization were conducted, and the weight decrease ratio (wt.%) representing the ratio of the weight of the carbides obtained to the weight of the charged raw materials was measured. The data obtained are shown in Table 1 below.

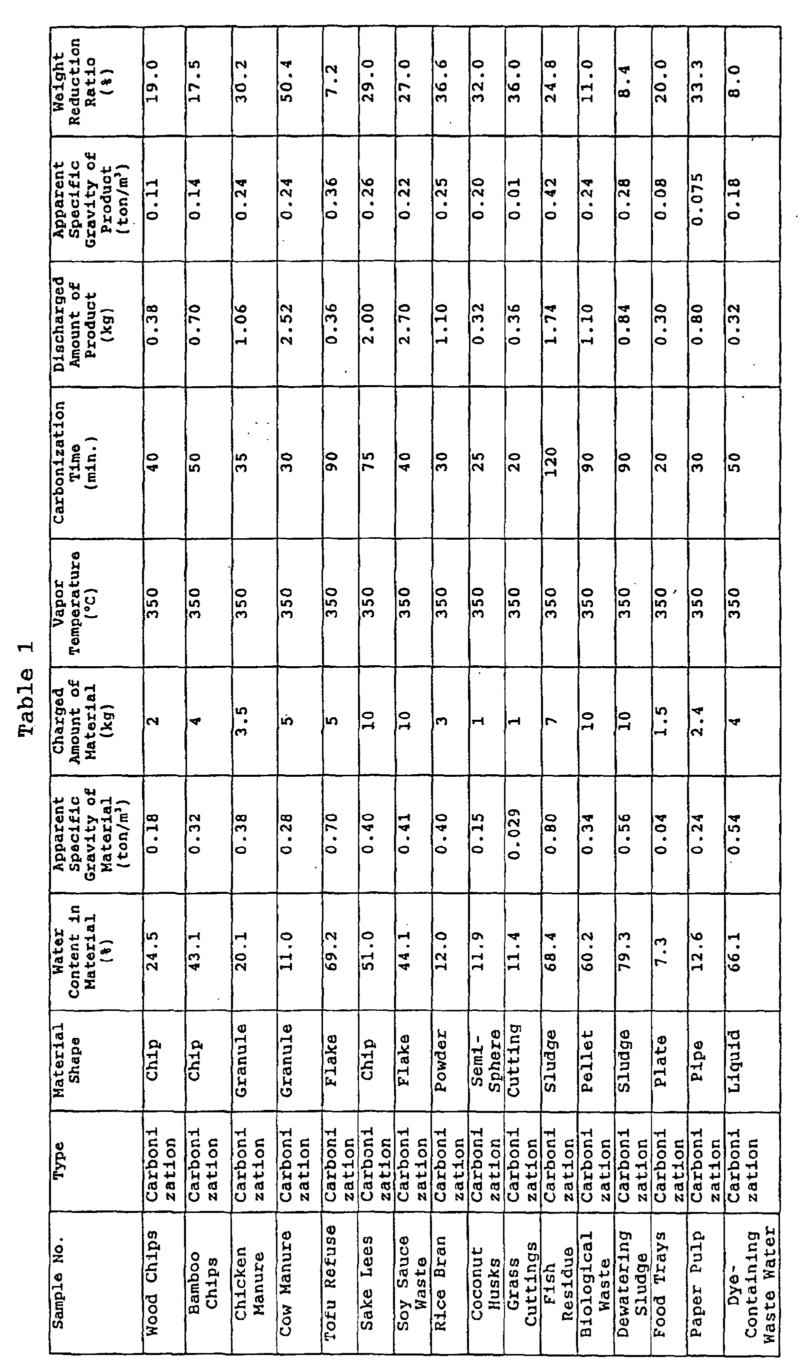

Data shown in the table confirmed that in the samples with a water content in the raw material of less than 0.30%, the raw material could be dried and completely carbonized within 30 min and the volume and weight thereof could be reduced significantly. Even when the amount of water was large, similar results were obtained within 120 min. Furthermore, dry distillation and volume reduction of waste could be conducted with an efficiency higher than that attained by using hot flow, and carbides suitable for fertilizers, feed, deodorizing agents, deodorants, dehumidifying and humidity-controlling agents, purification agents, soil modifiers, adsorbents, electromagnetic shield materials and the like could be appropriately manufactured without raising a problem of carbide shape collapse and the like.

Moreover, the generation of harmful substances such as dioxins and malodorous components and carbon dioxide causing environmental pollution, which was observed in organic waste incineration in the presence of oxygen, can be suppressed. Moreover, the carbides can be efficiently manufactured with a simple apparatus, without problems associated with the utilization of high-pressure superheated steam which led to leakage of steam and made it difficult to charge the raw materials continuously.

Data obtained by conducting analysis of components of carbides 52 produced by dry distillation and volume reduction of "tofu refuse" as a sample with the above-described dry distillation and volume reduction apparatus and analysis of components of sour solution recovered from the separation and recovery unit (condenser) 15 are shown in Table 2 and Table 3, respectively.

**Table 2**

| Item | Unit | Analytical Data | Notes |
|---|---|---|---|
| pH | | 8.93 | Value upon Three-fold dilution |
| Electric Conductivity (EC) | mS/cm | 270 | Value upon Five-fold dilution |
| 'Water | % | 0.1 | Original Material Content |
| Ash | % | 34.2 | Dry Material Content |
| Organic Substances | % | 65.8 | Dry Material Content |
| Carbon Content | % | 46.9 | Dry Material Content |
| Total Caloric Value | kJ/kg | 19800 | Measurement on Dry Product |
| Total Nitrogen (N) Content | % | 5.1 | Dry Material Content |
| Total Phosphoric Acid (P₂O₅) Content | % | 0.5 | Dry Material Content |
| Total Potassium (K₂O) Content | % | 9.7 | Dry Material Content |
| Total Iron (Fe₂O₃) Content | % | 0.05 | Dry Material Content |
| Total Aluminum (Al₂O₃) Content | % | 0.01 or less | Dry Material Content |
| Total Calcium (CaO) Content | % | 0.01 | Dry Material Content |
| Total Magnesium (MgO) Content | % | 0.01 or less | Dry Material Content |

**Table 3**

| Item | Unit | Analytical Result | Notes |
|---|---|---|---|
| pH | | 5.91 | Measurement on Original Material |
| Electric Conductivity (EC) | µS/cm | 340 | Value upon Five-fold dilution |
| Chemical Oxygen Demand (COD) | mg/L | 2216 | Original Material Content |
| Anion | | | |
| Phosphoric Acid(PO₄³⁻) | mg/L | 0 | Original Material Content |
| Chlorine(Cl⁻) | mg/L | 5.5 | Original Material Content |
| Nitrous Acid (NO₂⁻) | mg/L | 0 | Original Material Content |
| Bromine(Br⁻) | mg/L | 0 | Original Material Content |
| Nitric Acid(NO₃⁻) | mg/L | 7.6 | Original Material Content |
| Sulfuric Acid(SO₄²⁻) | mg/L | 5.2 | Original Material Content |
| Cation | | | |
| Sodium(Na⁺) | mg/L | 0 | Original Material Content |
| Ammonium(NH₄⁺) | mg/L | 4.1 | Original Material Content |
| Potassium (K⁺) | mg/L | 4.4 | Original Material Content |
| Magnesium(Mg²⁺) | mg/L | 1.2 | Original Material Content |
| Calcium(Ca²⁺) | mg/L | 4.7 | Original Material Content |

Furthermore, data obtained by conducting analysis of components of carbides 52 produced by dry distillation and volume reduction of "livestock waste such as cow manure" as a sample with the above-described dry distillation and volume reduction apparatus and analysis of components of sour solution recovered from the separation and recovery unit (condenser) 15 are shown in Table 4 and Table 5, respectively.

**Table 4**

| Item | Unit | Analytical Data | Notes |
|---|---|---|---|
| pH | | 9.10 | Value upon Three-fold dilution |
| Electric Conductivity (EC) | mS/cm | 1000 | Value upon Five-fold dilution |
| Water | % | 12.0 | Original Material Content |
| Ash | % | 8.3 | Dry Material Content |
| Organic Substances | % | 91.7 | Dry Material Content |
| Carbon Content | % | 70.2 | Dry Material Content |
| Total Caloric Value | kJ/kg | 29600 | Measurement on Dry Product |
| Total Nitrogen (N) Content | % | 4.9 | Dry Material Content |
| Total Phosphoric Acid (P₂O₅) Content | % | 5.9 | Dry Material Content |
| Total Potassium (K₂O) Content | % | 6.8 | Dry Material Content |
| Total Iron (Fe₂O₃) Content | % | 0.75 | Dry Material Content |
| Total Aluminum (Al₂O₃) Content | % | 0.01 or less | Dry Material Content |
| Total Calcium (CaO) Content | % | 0.45 | Dry Material Content |
| Total Magnesium (MgO) Content | % | 0.01 or less | Dry Material Content |

**Table 5**

| Item | Unit | Analytical Result | Notes |
|---|---|---|---|
| pH | | 6.55 | Measurement on Original Material |
| Electric Conductivity (EC) | µS/cm | 1000 | Value upon Five-fold dilution |
| Chemical Oxygen Demand (COD) | mg/L | 4488 | Original Material Content |
| Anion | | | |
| Phosphoric Acid(PO₄³⁻) | mg/L | 0 | Original Material Content |
| Chlorine(Cl⁻) | mg/L | 13.4 | Original Material Content |
| Nitrous Acid(NO₂⁻) | mg/L | 3.8 | Original Material Content |
| Bromine(Br⁻) | mg/L | 0 | Original Material Content |
| Nitric Acid(NO₃⁻) | mg/L | 1.4 | Original Material Content |
| Sulfuric Acid(SO₄²⁻) | mg/L | 7.6 | Original Material Content |
| Cation | | | |
| Sodium(Na⁺) | mg/L | 0 | Original Material Content |
| Ammonium(NH₄⁺) | mg/L | 3.6 | Original Material Content |
| Potassium (K⁺) | mg/L | 3.8 | Original Material Content |
| Magnesium (Mg²⁺) | mg/L | 0.6 | Original Material Content |
| Calcium (Ca²⁺) | mg/L | 0.6 | Original Material Content |

As described above, with the dry distillation and volume reduction apparatus comprising a superheated steam generator 1 for generating a superheated steam, a dry distillation and volume reduction vessel 2 for heating the organic waste 51 for dry distillation and volume reduction with the superheated steam supplied from the superheated steam generator 1, and heating gas supplier 41 for supplying the combustible gas generated by incomplete combustion of carbides 52 produced in the dry distillation and volume reduction vessel 2 as a heat source for heating the superheated steam generator 1, the organic waste 51 can be subjected to dry distillation and volume reduction with a simple structure and carbides 52 having excellent characteristics as a heat source for heating the superheated steam generator 1 can be produced.

Therefore, the utilization of carbides 52 as a fuel makes it possible to generate efficiently the superheated steam in the superheated steam generator 1 and to heat the organic waste 51 with the superheated steam, thereby providing for effective dry distillation and volume reduction of the waste, without consuming fuels such as petroleum or natural gas. Eventually, the amount of ash which is to be discarded can be greatly decreased and the generation of harmful substances or environmental contaminants can be effectively suppressed.

Furthermore, when the separation and recovery unit 15 is provided which comprises a condenser for separating and recovering useful components (sour solution) present in the dry distilled gas produced in the dry distillation and volume reduction vessel 2, as in the above-described embodiment, the useful components can be used effectively and the generation of contaminants by discarding harmful substances present in the dry distilled gas can be effectively prevented. In particular, the advantage of configuration in which various useful components contained in the dry distilled gas are separated from respective other components and recovered by setting the condensation temperature of the separation and recovery unit composed of the condenser to various values is that the utilization value of the apparatus can be increased.

The sour solution recovered from the separation and recovery unit 15 may be supplied into a methane fermentation tank for wastewater treatment and used as a weight loss for methane fermentation. Furthermore, in the preferred configuration, the waste gas obtained after the separation and recovery of useful components in the separation and recovery unit 15 is released into the atmosphere after the removal of malodorous components in an apparatus for the treatment of malodorous components.

Moreover, because in the above-described embodiment incomplete combustion is induced in the heating gas supplier 41 after the addition of waste oil to carbides 51, the utilization of the combustible gas produced by gasification of the waste oil can result in efficient gasification of carbides and substantial increase in thermal energy of the combustible gas supplied, for example, to the superheated steam generator 1.

When the configuration is used in which the superheated steam superheated to a temperature of 250~500°C under normal pressure has been supplied from the superheated steam generator 1 to the dry distillation and volume reduction vessel 2 under a low pressure (for example, less than 2 atm) of no less than the normal pressure, and organic waste 51 is pyrolyzed in an oxygen-free or low-oxygen atmosphere, as in the above-described embodiment, the waste 51 can be subjected to effective dry distillation and volume reduction, without problems associated with incineration of organic wastes in the presence of oxygen, those problems including the generation or harmful substances such as dioxins or malodorous components and carbon dioxide causing environmental pollution. Another advantage is that when superheated steam under a high pressure of, for example, no less than 2 atm is used, the organic waste 51 can be subjected to efficient dry distillation and volume reduction with a simple apparatus, without problems associated with the utilization of high-pressure superheated steam which led to leakage of the steam and made it difficult to charge the raw materials continuously.

In the above-described second embodiment, similarly to the first embodiment, driers such as a cyclone-type composite-flow drier and rotary drier for drying of organic waste 51 or a crusher may be installed, or a compression molding granulator for compression granulation of organic waste 51 may be installed. For example, when organic waste with a high water content other than wood-based waste is subjected to dry distillation and volume reduction, the organic waste may be dewatered in a dewatering apparatus and then supplied via a metering feeder to the drier where the dewatered organic waste is dried sufficiently, followed by granulation in the compression molding granulator and supply to the dry distillation and volume reduction vessel 2.

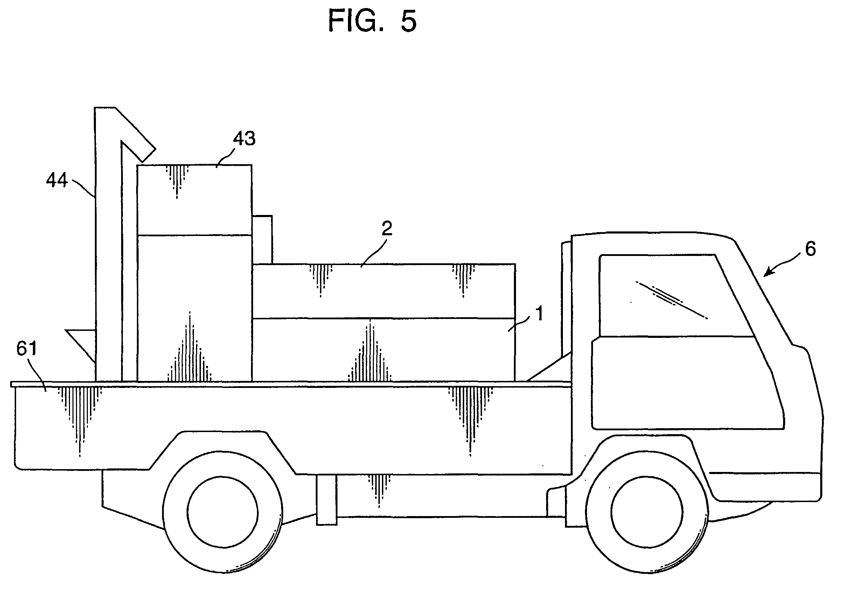

FIG. 5 illustrates the third embodiment of the dry distillation and volume reduction apparatus for waste in accordance with the present invention. In this dry distillation and volume reduction apparatus for waste, the superheated steam generator 1, the dry distillation and volume reduction vessel 2, heating gas supplier (not shown), a hopper 43 for charging the waste into the dry distillation and volume reduction vessel 2, and a bucket conveyor 44 for transferring the waste into the hopper 43 are mounted on a load-carrying platform 61 of a vehicle 6 and the dry distillation and volume reduction vessel 2 is disposed above the superheated steam generator 1, thereby integrating the superheated steam generator 1 with the dry distillation and volume reduction vessel 2.

When the dry distillation and volume reduction vessel 2 and the superheated steam generator 1 are integrated by installing the former above the latter, the dry distillation and volume reduction apparatus can have a simple and compact configuration. Moreover, since the dry distillation and volume reduction vessel 2 is heated by the heat emanated from the superheated steam generator 1, dry distillation and volume reduction of waste can be implemented with good efficiency. Furthermore, when the superheated steam generator 1, the dry distillation and volume reduction vessel 2, and the heating gas supplier (not shown) are installed on the load-carrying platform 61 of vehicle 6, as described above, the dry distillation and volume reduction apparatus can be very easily transported to any place by the vehicle 6.

The dry distillation and volume reduction apparatus comprising the superheated steam generator 1, dry distillation and volume reduction vessel 2, heating gas supplier 4, 41, the waste supplier 6 for supplying the waste into the dry distillation and volume reduction vessel 2, and electric power generator 7 may be installed on a marine plant to conduct dry distillation and volume reduction and effectively use the electric power and warm water generated in this process as well as waste dry distillation and volume reduction products and sour solution on the sea. For example, the electric power may be used for driving of the dry distillation and volume reduction apparatus, apparatus improving water quality, or seawater circulation apparatus, the warm water can be used to grow marine plants, the waste dry distillation and volume reduction products may be used for bedding, for example, for marine plant growing, and the sour solution may be used as a fertilizer for marine plant growing.

### Industrial Applicability

As described above, with the dry distillation and volume reduction apparatus for waste in accordance with the present invention, exhaust gases of engines that have been usually released into the atmosphere or carbides of the waste that have been mainly discarded can be used effectively to generate the superheated steam, this apparatus being suitable for waste treatment by heating the waste with the superheated steam and subjecting it to effective dry distillation and volume reduction, especially, for efficient treatment of organic waste.

## Claims

1. A dry distillation and volume reduction apparatus for waste, comprising:
a superheated steam generator for generating a superheated steam;
a dry distillation and volume reduction vessel for heating and subjecting the waste to dry distillation and volume reduction using the superheated steam supplied from the superheated steam generator; and
a heating gas supplier for supplying an exhaust gas of an engine as a heat source for heating the superheated steam generator.

2. The dry distillation and volume reduction apparatus for waste according to claim 1, further comprising a drier for drying in advance the waste to be supplied to the dry distillation and volume reduction vessel.

3. The dry distillation and volume reduction apparatus for waste according to claim 2, wherein the drier includes a cyclone-type composite flow drier having a conical container which narrows downward, a hot flow supplier for supplying a hot flow along the inner peripheral surface of the conical container, and a waste transporter for transporting the waste along the inner peripheral surface of the conical container.

4. The dry distillation and volume reduction apparatus for waste according to claim 2, wherein the drier includes a rotary drier having an inclined rotary cylinder provided with a sweeping blade for sweeping the waste upward and hot flow supplier for supplying a hot flow into the inclined rotary cylinder.

5. The dry distillation and volume reduction apparatus for waste according to claim 3 or 4, wherein exhaust gas led out from the superheated steam generator is used as a heat source for heating the hot flow supplier.

6. The dry distillation and volume reduction apparatus for waste according to claim 3 or 4, wherein high-temperature gas led out from the dry distillation and volume reduction vessel is used as a heat source for heating of the hot flow supplier.

7. The dry distillation and volume reduction apparatus for waste according to any of claims 1 to 6, further comprising a crusher for crushing in advance the waste supplied to the dry distillation and volume reduction vessel.

8. The dry distillation and volume reduction apparatus for waste according to any of claims 1 to 7, wherein the superheated steam generator is provided with a feed tube for warm water led out from the cooling water system of an engine and the superheated steam is generated by heating the warm water passing through the feed tube.

9. The dry distillation and volume reduction apparatus for waste according to any of claims 1 to 8, wherein the superheated steam generator is provided with a burner serving as a heater for the superheated steam generator.

10. The dry distillation and volume reduction apparatus for waste according to any of claims 1 to 9, further comprising a reflux unit for reusing the superheated steam supplied to the dry distillation and volume reduction vessel as a heat source for heating for the superheated steam generation by refluxing the superheated steam to the superheated steam generator.

11. The dry distillation and volume reduction apparatus for waste according to claim 9 or 10, wherein combustible components recovered from the dry distilled gas generated during dry distillation and volume reduction of the waste by the dry distillation and volume reduction vessel are used as a fuel for the burner.

12. The dry distillation and volume reduction apparatus for waste according to any of claims 9 to 11, wherein carbides produced during dry distillation and volume reduction of the waste by the dry distillation and volume reduction vessel are supplied into the superheated steam generator and burned by the burner.

13. The dry distillation and volume reduction apparatus for waste according to any of claims 1 to 12, wherein exhaust gases of an engine serving as a driving source of a power generator are used as a heat source for heating the superheated steam generator.

14. The dry distillation and volume reduction apparatus for waste according to any of claims 1 to 13, wherein a portion of superheated steam generated by the superheated steam generator is supplied to a turbine power generator to drive the turbine power generator.

15. A dry distillation and volume reduction apparatus for waste, comprising:
a superheated steam generator for generating a superheated steam;
a dry distillation and volume reduction vessel for heating and subjecting the organic waste to dry distillation and volume reduction using the superheated steam supplied from the superheated steam generator; and
a heating gas supplier for supplying combustible gas generated by incomplete combustion of carbides produced in the dry distillation and volume reduction vessel as a heat source for heating the superheated steam generator.

16. The dry distillation and volume reduction apparatus for waste according to claim 15, wherein waste oil is added to the carbides to induce the incomplete combustion.

17. The dry distillation and volume reduction apparatus for waste according to any of claims 1 to 16, wherein a low-pressure superheated steam under a pressure of no less than the normal pressure which has been superheated to a temperature of 250 to 500°C under the normal pressure in the superheated steam generator is supplied to the dry distillation and volume reduction vessel and the waste is pyrolyzed in an oxygen-free or low-oxygen atmosphere.

18. The dry distillation and volume reduction apparatus for waste according to any of claims 1 to 17, comprising a separation and recovery unit for separating and recovering useful components from the dry distilled gas produced during dry distillation and volume reduction by the dry distillation and volume reduction vessel.

19. The dry distillation and volume reduction apparatus for waste according to any of claims 1 to 18, wherein the superheated steam generator and the dry distillation and volume reduction vessel are integrated.

20. The dry distillation and volume reduction apparatus for waste according to any of claims 1 to 18, wherein the superheated steam generator, dry distillation and volume reduction vessel, and heating gas supplier are installed on a vehicle load-carrying platform.
